# EUROPEAN PATENT SPECIFICATION

(11) **EP 1 266 105 B1**
(45) Date of publication and mention of the grant of the patent: **05.12.2007**
(21) Application number: 01919750.8
(22) Date of filing: 16.03.2001
(51) Int. Cl.: E04F 15/02, E04F 13/08, B32B 7/06

(54) **METHOD OF LAYING FLOORS AS WELL AS THEIR PULLING AWAY IN CASE OF REPLACEMENT, AND MEANS FOR CARRYING OUT THE SAME**
VERFAHREN ZUM VERLEGEN EINES FUSSBODENS SOWIE DESSEN HERAUSZIEHEN IM FALLE EINER ERSETZUNG, UND MITTEL ZU SEINER DURCHFÜHRUNG
PROCEDE POUR LA POSE DE PLANCHERS ET POUR LEUR DEPOSE EN CAS DE REMPLACEMENT, AINSI QUE MOYENS POUR EXECUTER CE PROCEDE

(30) Priority: 17.03.2000 IT RM000144
(43) Date of publication of application: 18.12.2002
(73) Proprietor: Raineri, Gabriele, 95036 Randazzo (IT)
(72) Inventor: Raineri, Gabriele, 95036 Randazzo (IT)
(74) Representative: Sarpi, Maurizio
(86) International application number: PCT/IT2001/000133
(87) International publication number: WO 2001/069007

(56) References cited:
- EP-A- 0 969 162
- WO-A-96/34164

## Description

The present invention relates to building and, more particularly, an improved method for laying floors and/or linings of any kind so as to allow their next quick removal for the replacement thereof and laying down a new one, without the necessity of a restoration of the underlying sheeting.

Usually, the replacing of floors and tiles, majolica and like linings, but also moquette, parquet or wall-papers requires destructive interventions to remove the same and sometime the support sheeting by means of tools and/or electric or pneumatic percussion machines, with obvious disagreeable consequences, such as noise, dust and waste, as well as increase in cost and time of demolition.

Italian Patent Application No. RM98A000450 (=EP 0969162 A) filed on July 3, 1998 in the name of the same applicant discloses a laying method which allows a quick removal of the floor or the lining from the underlying sheeting and the next laying of a new floor or lining. To this end, there is provided the use of fixed and movable support members which are engaged with each other in a removable manner upon laying: the first one being secured to the sheeting, whereas the floor or lining is glued on the second one so that, if necessary, it may be detached from the fixed support member by acting on corresponding handles arranged along the perimetrical rim of the movable support member.

Even if the desired results are attained, said known method has the drawback of requiring the use of fixed and movable supports which are provided with contact surfaces engaged with each other and different from each other and suitably manufactured to this purpose.

It is known, from WO 96 34164 A1, a cover panel applicable to flat surfaces provided with two superimposed cushion or stuffing layers in acrylic material having undulated facing surfaces, wherein said superimposed layers are respectively fixed to the cover panel and to the flat surface by means of an adhesive film.

A first disadvantage of said known cover panel consists in that the undulated surfaces of said superimposed cushions cannot strongly engage each other.

A second disadvantage consists in that, in order to allow the fixing by means of an adhesive film, the flat surface must be perfectly regular and smooth.

A first object of the invention is to avoid such drawback by using two members having the same shape as fixed and movable supports: one member rigidly fixed to the sheeting and the other one engaged with the first one in a removable manner, a floor or lining being then glued thereon.

A second object of the invention is to provide engagement means which are removable from one another and capable of forming perspiration ducts for the underlying sheeting and/or glue.

A third object of the invention is to provide anchoring means capable of reducing the tearing resistance when it is necessary to remove the floor or the lining from the underlying support sheeting.

A fourth object of the invention is to provide anchoring means which may easily be folded upwards and downwards along the edges of the floor or lining.

Said objects have been attained by employing two fret-shaped sheaths having the same shape as fixed and movable supports.

The invention will be better understood from the following detailed disclosure with reference to the accompanying drawings which show a not limiting example of an embodiment thereof and some alternative embodiments.

In the drawings:

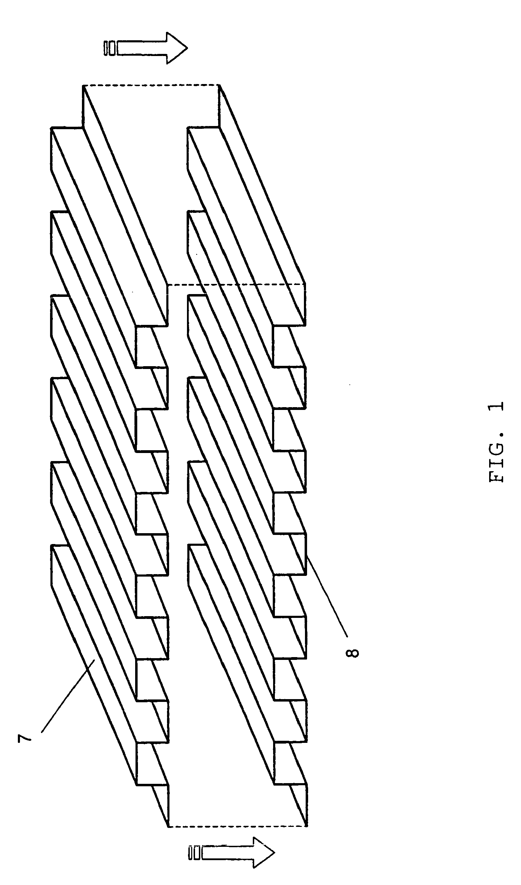

Figure 1 shows schematically a perspective view of the sheaths to be placed upon each other and engaged with each other;
Figure 2 shows the invention as applied to a floor to be replaced;
Figure 3 similar to Figure 2 shows a second embodiment of the invention.

Figure 4 shows a perspective view of a third embodiment of the invention.

Referring now to the drawings, a fret-shaped sheath of flexible material according to the present invention is placed as double layer on a support sheeting 9 (which could either be a floor or a lining) so that fixed member 8 and movable member 7 having the same shape mutually engage to each other in a removable manner.

Preferably, said fret-shaped sheath 7, 8 has a cross-section such that the substantially vertical walls of the grooving are slightly tilted so that any projecting portion has a dovetail-shaped outline which is particularly adapted to engage with the corresponding grooving having a like outline or profile.

It should be emphasized that the use of one kind of support to make fixed member 8 and movable member 7 has obvious economical advantages guaranteeing at the same time the requested functions such as quick removal of the floor or lining and next replacement thereof.

From the practical point of view, movable member 7 of the fret-shaped sheath preferably has projecting portions with such a size as to allow an exact insertion into the corresponding grooving of fret-shaped fixed member 8.

Conveniently, the support or fixed lower sheath 8 may either be embedded in sheeting 9 upon its manufacturing or secured thereto by gluing it by a conventional glue 4 for floors or linings 5.

A further advantage of the invention is that the requested functions can also be attained if floors or linings 5 are made of thin materials, such as linoleum, moquette, wall-paper. In fact, sheaths or supports of the type described above provided with less deep grooving of the fret-shaped profile may also be used, thus attaining a more uniform surface able to provide a more homogeneous, continuous support.

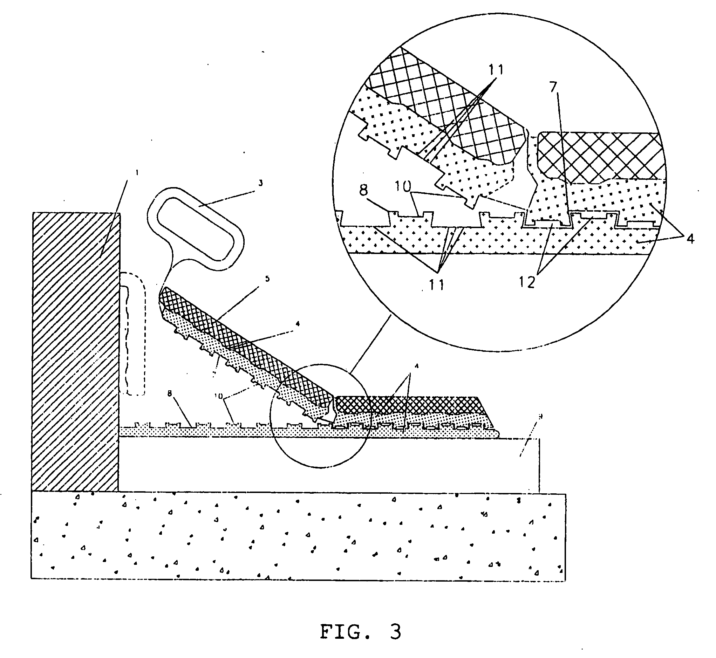

A first alternative embodiment of the present invention relates to the cross-section shape of the fret-shaped support or sheath disclosed above. With particular reference to Figure 3, it should be noted that said alternative embodiment of the invention provides that the projecting portion of the fret-shaped sheath has a longitudinal groove 10 which is parallel to the sheath grooving.

Conveniently, when the two fixed and movable supports or sheaths 8 and 7 are coupled with each other, said further groove 10 forms a duct 12 capable of assuring the perspiration of both lower support sheeting 9 and glue 4. To this end, according to the invention, small perspiration holes 11 which communicate with longitudinal ducts 12 ending at the wall which delimits the floor are provided on the bottom of the grooving of fixed and movable portions 8 and 7.

It should be appreciated that such first alternative embodiment makes the removal easier as the support formed in such a way is more yielding upon removal, therefore, the tearing resistance is considerably lower.

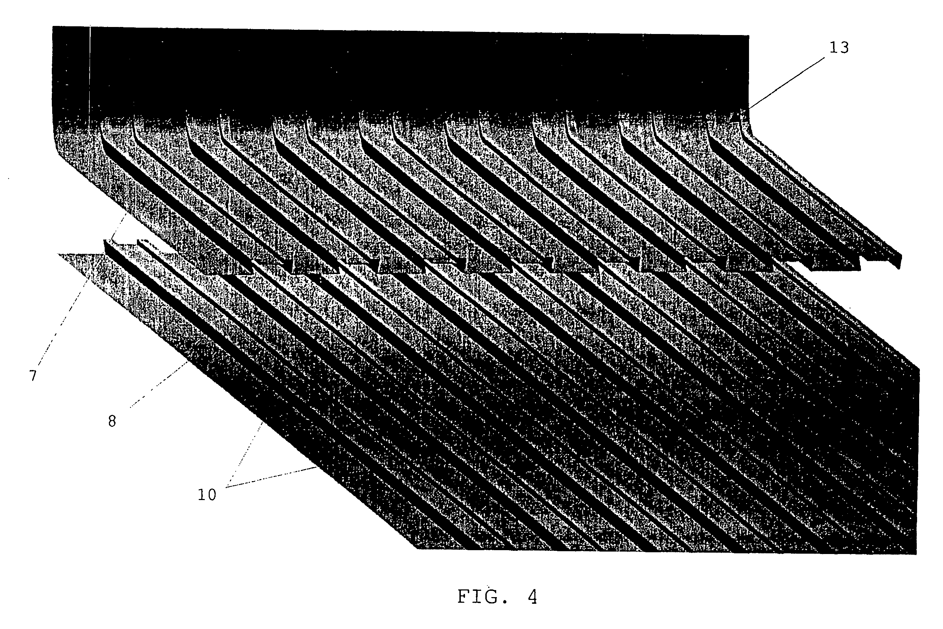

A second alternative embodiment shown in Figure 4 relates to the folding of the movable fret-shaped sheath 7 along the edges delimiting the floor. With regard to this, it should be noted that the sheath disclosed above allows an easy folding along the parallel sides of the fret-shaped members, however, said folding is hindered at the other two sides by the fret-shaped members which form strengthening ribs withstanding the deformations in the direction perpendicular to the plane of the sheath.

To this end, in this second alternative embodiment it is provided at least one bellow-shaped portion 13 capable of being deformed which is preferably located near the edge to be folded and extends transversally to the grooving of the fret-shaped sheath and is able to allow an easy upward and downward folding of the end portion of the sheath.

Conveniently, this alternative embodiment is particularly useful, for instance, for the floorings of terraces where it is advisable to provide a "watertight basin" integral with the perimetrical walls of the terrace. Moreover, according to a peculiar feature of the invention, the above-mentioned perspiration ducts 12 allow the evaporation of any condensate which could arise between flooring 5 and sheeting 9.

Such alternative embodiment is also useful for balconies and projecting coverings where it is advisable to fold the ends of the sheath downwards to avoid a penetration of moisture into the sheeting and below the flooring.

A still further alternative embodiment of the invention provides a movable support or sheath 7 consisting of a particularly resistant non-woven fabric of the commercially available kind which is preferably preformed so as to have a contacting surface corresponding exactly to fixed sheath 8.

Finally, according to the present invention there are provided perimetrical side cables made of a material which is resistant to corrosion and moisture and provided with handles or hook 3 which are hidden, for instance, by a skirting board on wall 1 and allow movable sheath 7 to be pulled easily away from fixed sheath 8 to remove floor or lining 5.

The method according to the present invention comprises the following steps:
A. Securing fixed sheath 8 to support sheeting 9 during its manufacturing or thereafter by means of an adhesive material 4 well known in the art;
B. Positioning movable sheath 7 provided with perimetrical cables for its removal, and fitting it into fixed sheath 8;
C. Gluing floor or lining 5 onto movable sheath 7;
D. Hiding hooks or handles 3 of the pulling cables behind the skirting board or the like.

Should floor or lining 5 be removed, a new floor or lining 5 can easily be placed by carrying out the above process step B, wherein the above-mentioned movable sheath 7 consists of a flexible material like fixed sheath 8 or it is made of a non-woven fabric, preferably a preformed one.

From the operative point of view, it should be appreciated that, if upon first laying of the floor fixed and movable sheaths are supplied already fitted with each other, process step B will advantageously be avoided and will only be necessary for the next laying of a new floor or lining 5 after the removal of the previous one.

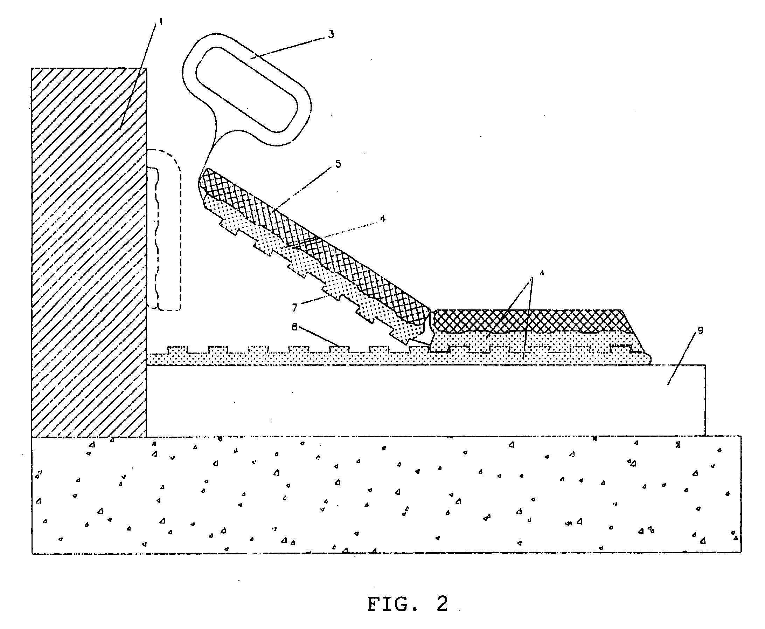

Advantageously, according to the invention, it is also possible to use a fixed sheath 8 of the kind shown in Figure 2 with a movable sheath 7 according to the first alternative embodiment shown in Figure 3. In this way, there may be formed perspiration ducts 12, even if a fixed support 8 which is particularly resistant to lining tearing stress and a new laying is provided.

The present invention has been disclosed and illustrated in its preferable embodiment and in some alternative embodiments, however, it should be understood that those skilled in the art will be able to carry out some functionally equivalent modifications and/or changes, without departing from the scope of the appended claims.

## Claims

1. A method of laying floors or linings and their quick removal and replacement by gluing or fixing them onto means which are removable with respect to a support sheeting (9) and which comprise fixed support means (8) and movable support means (7) having substantially similar shapes **characterized in that** said fixed (8) and movable (7) support means consist each of a fret-shaped sheath of flexible, resistant material, the first means (8) being rigidly fixed to support sheeting (9), the second means (7) being stuck to first means (8) in a removable manner, and floors or linings (5) being fixed in an usual manner on said second support means, during the installation, by means of a layer of conventional glue for floors or linings.

2. The method according to claim 1, wherein the projecting portions of fret-shaped movable sheath (7) have such a size as to allow their fitting into corresponding hollow portions of fret-shaped fixed sheath (B), said projecting portion and said hollow portion having a dovetail cross section.

3. The method according to claim 2, wherein said fret-shaped flexible sheath is arranged in double layers on support sheeting (9) so that fixed sheath (8) and movable sheath (7) are fitted to each other so as to be removable from each other.

4. The method according to claim 1, wherein fixed lower sheath (8) is either embedded in support sheeting (9) during its manufacturing or anchored thereto subsequently by gluing it on the sheeting by means of a glue (4) typically used for floors or linings (5).

5. The method according to claim 1, wherein in case of floors or linings (5) consisting of thin materials, such as linoleum, moquette or wall-papers, fixed (8) and movable (7) sheaths are provided with fret-shaped portions which are less projecting and less deep so as to attain a more uniform surface adapted to attain a more homogeneous, continuous support.

6. The method according to claim 1, wherein said movable sheath (7) consists of a particularly resistant non-woven fabric which is available on the market.

7. The method according to claim 6, wherein said movable sheath (7) of non-woven fabric has a contact surface exactly fitting to the surface of fixed sheath (8).

8. The method according to claim 1, wherein perimetrical side cables are used, which are resistant to corrosion and moisture and are provided with handles (3) or hooking ends hidden for example in the skirting board of wall (1) and allowing movable sheath (7) to be easily pulled away from fixed sheath (8) to replace the floor or lining by a new one.

9. The method according to claim 8, comprising the following steps:
A. Securing fixed sheath (8) to support sheeting (9) during its manufacturing or thereafter by means of an adhesive material (4) well known in the art;
B. Positioning movable sheath (7) provided with perimetrical cables for its removal, and fitting it into fixed sheath (8) ;
C. Gluing floor or lining (5) onto movable sheath (7);
D. Hiding hooks or handles (3) of the pulling cables behind the skirting board or the like.

10. The method according to claim 9, wherein after removing a floor or lining (5), a new floor or lining (5) is laid starting from the process step B, said movable sheath (7) being either identical to fixed sheath (8) of flexible material or consisting of a resistant non-woven fabric.

11. The method according to claim 9, wherein in case fixed (7) and movable (8) sheaths are supplied already fitted to each other upon first laying thereof, the method is carried out by passing directly from step A to step C, thus avoiding process step B which is superfluous.

12. The method according to claim 2 or 3, wherein said fixed (8) and/or movable (7) support means have trot-chaped projecting portions provided with a longitudinal groove (10) parallel to the fret-shaped means so that when the two fixed (8) and movable (7) sheaths are coupled with each other, said further groove (10) forms a duct (12) which allows the perspiration of both underlying support sheeting (9) and adhesive material (4), small perspiration holes (11) being provided to this end on the bottom of the grooves of the fret-shaped fixed (8) and movable (7) sheaths, said holes communicating with said longitudinal ducts (12) ending at the wall which delimits the.floor or lining.

13. The method according to claim 12, wherein fret-shaped movable sheath (7) has at least one bellow-shaped portion capable of being deformed and provided near the edge to be folded perpendicular to the grooves of said fret-shaped sheaths, said portion being able to allow the end portion of movable sheath (7) to be easily folded upwards or downwards.

14. An anchoring means for laying floors and linings and their quick removal and replacement according to the method of claim 1, formed by fixable support.means (8) and movable support means (7) having substantially the same shape, **characterised in that** said fixed (8) and movable (7) support means consist each of a fret-shaped sheath of flexible, resistant material, the first means (8) being rigidly fixable to support sheeting (9), the second means (7) being stickable to first means (8) in a removable manner, and floors or linings (5) being fixable in an usual manner on said second support means, during the installation, by means of a layer of conventional glue for floors or linings.

15. The anchoring means according to claim 14, wherein the projecting portions of fret-shaped movable sheath (7) have such a size as to allow their fitting into corresponding hollow portions of fret-shaped fixed sheath (8), said projecting portion and said hollow portion having a dovetail cross section.

16. The anchoring means according to claim 14, wherein said fixed (8) and/or movable (7) support means have fret-shaped projecting portions provided with a longitudinal groove (10) parallel to the fret-shaped means so that when the two fixed (8) and movable (7) sheaths are coupled with each other, said further groove (10) forms a duct (12) which allows the perspiration of both underlying support sheeting (9) and adhesive material (4), small perspiration holes (11) being provided to this end on the bottom of the grooves of the fret-shaped fixed (8) and movable (7) sheaths, said holes communicating with said longitudinal ducts (12) ending at the wall which delimits the floor or lining.

17. The anchoring means according to claim 14, wherein fret-shaped movable sheath (7) has at least one bellow-shaped portion capable of being deformed and provided near the edge to be folded perpendicular to the grooves of said fret-shaped sheaths, said portion being able to allow the end portion of movable sheath (7) to be easily folded upwards or downwards.

## Patentansprüche

1. Verfahren zum Verlegen von Fußböden oder Belägen und deren schnelles Entfernen und Ersetzen durch Verkleben oder Fixieren derselben auf Mitteln, die bezüglich einer Stützverkleidung (9) entfernbar sind, und die feste Stützmittel (8) und bewegliche Stützmittel (7) mit im Wesentlichen ähnlichen Formen umfassen, **dadurch gekennzeichnet, dass** die festen (8) und beweglichen (7) Stützmittel jeweils aus einer gezahnten Hülle aus biegsamem, widerstandsfähigem Material bestehen, wobei die ersten Mittel (8) starr an der Stützverkleidung (9) befestigt sind, die zweiten Mittel (7) entfernbar an den ersten Mitteln (8) festsitzen, und wobei die Böden oder Beläge (5) während des Verlegens auf eine üblichen Weise auf den zweiten Stützmitteln mithilfe einer Schicht aus konventionellem Kleber für Böden oder Beläge befestigt werden.

2. Verfahren nach Anspruch 1, wobei die vorstehenden Abschnitte der gezahnten, beweglichen Hülle (7) eine solche Größe haben, dass sie deren Einpassung in entsprechende hohle Abschnitte der gezahnten, festen Hülle (8) gestatten, wobei der vorstehende Abschnitt und der hohle Abschnitt einen schwalbenschwanzförmigen Querschnitt haben.

3. Verfahren nach Anspruch 2, wobei die gezahnte, biegsame Hülle in doppelten Schichten auf der Stützverkleidung (9) angeordnet ist, so dass die feste Hülle (8) und die entfernbare Hülle (7) aneinander anliegen, so dass sie voneinander lösbar sind.

4. Verfahren nach Anspruch 1, wobei die feste untere Hülle (8) entweder in die Stützverkleidung (9) während ihrer Herstellung eingebettet oder anschließend daran verankert wird, indem sie auf die Verkleidung mithilfe eines Klebers (4) geklebt wird, der typischerweise für Böden oder Beläge (5) verwendet wird.

5. Verfahren nach Anspruch 1, wobei bei. Böden oder Belägen (5) aus dünnem Material, beispielsweise Linoleum, Mokett oder Tapeten, die festen (8) und beweglichen (7) Hüllen mit gezahnten Abschnitten versehen sind, die weniger vorstehen und weniger tief sind, um eine gleichförmigere Oberfläche zu erhalten, mit der eine homogenere, kontinuierliche Stütze erreicht werden kann.

6. Verfahren nach Anspruch 1, wobei die bewegliche Hülle (7) aus einem besonders widerstandfähigen nicht gewebten Gewebe besteht, das auf dem Markt erhältlich ist.

7. Verfahren nach Anspruch 6, wobei die bewegliche Hülle (7) aus nicht gewebtem Gewebe eine Berührungsfläche hat, die genau mit der Oberfläche der festen Hülle (8) zusammenpasst.

8. Verfahren nach Anspruch 1, wobei Umfangsseitenkabel verwendet werden, die beständig gegenüber Korrosion und Feuchtigkeit sind und die mit Griffen (3) oder Einhakenden versehen sind, die zum Beispiel in der Sockelleiste der Wand (1) versteckt sind und die es gestatten, dass die bewegliche Hülle (7) leicht von der festen Hülle (8) abgezogen werden kann, um den Boden oder Belag durch einen neuen zu ersetzen.

9. Verfahren nach Anspruch 8, umfassend die folgenden Schritte:
A. Befestigen der festen Hülle (8) an der Stützverkleidung (9) während deren Herstellung oder anschließend mithilfe eines im Stand der Technik wohl bekannten klebenden Materials (4);
B. Positionieren der beweglichen Hülle (7), die mit Umfangskabeln für deren Entfernung versehen ist, und deren Einpassen in die feste Hülle,
C. Kleben des Fußbodens oder des Belags (5) auf die bewegliche Hülle,
D. Verstecken der Haken oder Griffe (3) der Zugkabel hinter der Sockelleiste oder ähnlichem.

10. Verfahren nach Anspruch 9, wobei nach dem Entfernen eines Fußbodens oder Belags (5), ein neuer Fußboden oder Belag (5) gelegt wird, beginnend mit dem Verfahrensschritt B, wobei die bewegliche Hülle (7) entweder identisch mit der festen Hülle (8) aus biegsamem Material ist oder aus einem widerstandsfähigen, nicht gewebten Gewebe besteht.

11. Verfahren nach Anspruch 9, wobei, falls beim ersten Verlegen feste (7) und bewegliche (8) Hüllen bereitgestellt werden, die bereits aneinander befestigt sind, das Verfahren ausgeführt wird, indem direkt von Schritt A zu Schritt C weitergegangen wird, wodurch der Verfahrensschritt B, der überflüssig ist, vermieden wird.

12. Verfahren nach Anspruch 2 oder 3, wobei die festen (8) und/oder beweglichen (7) Stützmittel gezahnte, vorstehende Abschnitte haben, die eine Längsnut (10) parallel zu den gezahnten Mitteln aufweisen, so dass, wenn die zwei festen (8) und beweglichen (7) Hüllen miteinander verbunden werden, die weitere Nut (10) einen Kanal (12) bildet, der sowohl ein Atmen der darunter liegenden Stützverkleidung (9) als auch des klebenden Materials (4) gestattet, wobei zu diesem Zweck kleine Atmungslöcher (11) auf dem Boden der Nuten der gezahnten festen (8) und beweglichen (7) Hüllen vorgesehen sind, wobei die Löcher mit den Längskanälen (12) verbunden sind, die an der Wand enden, die den Boden oder den Belag begrenzt.

13. Verfahren nach Anspruch 12, wobei die gezahnte bewegliche Hülle (7) zumindest einen balgförmigen Abschnitt hat, der verformt werden kann und nahe der Kante vorgesehen ist, die senkrecht zu den Nuten der gezahnten Hüllen gefaltet werden soll, wobei der Abschnitt ein leichtes Hoch- oder Runterklappen des Endabschnitts der beweglichen Hülle (7) zulassen kann.

14. Verankerungsmittel zum Verlegen von Böden und Belägen und deren rasche Entfernung und Austausch gemäß dem Verfahren nach Anspruch 1, gebildet durch befestigbare Stützmittel (8) und bewegliche Stützmittel (7) mit im Wesentlichen derselben Form, **dadurch gekennzeichnet, dass** die festen (8) und beweglichen (7) Stützmittel jeweils aus einer gezahnten Hülle aus biegsamem, widerstandfähigem Material bestehen, wobei die ersten Mittel (8) starr an der Stützverkleidung (9) befestigt werden können, die zweiten Mittel (7) an den ersten Mitteln (8) ablösbar befestigt werden können, und Böden und Beläge (5), die während des Einbaus auf übliche Weise auf den zweiten Stützmitteln mithilfe einer Schicht aus herkömmlichem Kleber für Böden oder Beläge befestigt werden können.

15. Verankerungsmittel nach Anspruch 14, wobei die vorstehenden Abschnitte der gezahnten beweglichen Hülle (7) eine solche Größe haben, dass sie in die entsprechenden hohlen Abschnitte der gezahnten, festen Hülle (8) eingepasst werden können, wobei der vorstehende Abschnitt und der hohle Abschnitt einen schwalbenschwanzartigen Querschnitt haben.

16. Verankerungsmittel nach Anspruch 14, wobei die festen (8) und/oder beweglichen (7) Stützmittel gezahnte, vorstehende Abschnitte haben, die mit einer Längsnut (10) parallel zu den gezahnten Mitteln ausgestattet sind, so dass, wenn die zwei festen (8) und beweglichen (7) Hüllen miteinander verbunden werden, die weitere Nut (10) einen Kanal (12) bildet, der die Atmung sowohl der darunter liegenden Stützverkleidung (9) als auch des klebenden Materials (4) gestattet, wobei kleine Atmungslöcher (11) zu diesem Zweck auf dem Boden der Nuten der gezahnten festen (8) und beweglichen (7) Hüllen vorgesehen sind, wobei die Löcher mit den Längskanälen (12) verbunden sind, die an der Wand enden, die den Boden oder den Belag begrenzt.

17. Verankerungsmittel nach Anspruch 14, wobei die gezahnte, bewegliche Hülle (7) zumindest einen balgförmigen Abschnitt hat, der verformt werden kann und nahe der Kante vorgesehen ist, die senkrecht zu den Nuten der gezahnten Hüllen gefaltet werden soll, wobei der Abschnitt ein leichtes Hoch- oder Runterklappen des Endabschnitts der beweglichen Hülle (7) gestatten kann.

## Revendications

1. Procédé pour la pose de planchers ou de revêtements et leur retrait et remplacement rapides en les collant ou en les fixant sur des éléments qui sont amovibles par rapport à un substrat (9) et qui comprend un élément de support fixe (8) et un élément de support mobile (7) ayant sensiblement la même forme, **caractérisé en ce que** ledit élément de support fixe (8) et ledit élément de support mobile (7) consistent chacun en une protection crénelée en matière flexible et résistante, le premier élément (8) étant fixé rigidement au substrat (9), le second élément (7) étant immobilisé avec le premier élément (8) de manière amovible, et les planchers ou revêtements (5) étant fixés de manière habituelle sur ledit second élément de support, au cours de la pose, au moyen d'une couche de colle conventionnelle pour planchers ou revêtements.

2. Procédé selon la revendication 1, dans lequel les parties en relief de la protection déplaçable crénelée (7) présentent des dimensions leur permettant d'être reçues à ajustement dans les parties creuses correspondantes de la protection fixe crénelée (8), lesdites parties en relief et lesdites parties creuses présentant une section transversale en queue d'aronde.

3. Procédé selon la revendication 2, dans lequel ladite protection flexible crénelée est prévue en deux couches sur le substrat (9) de sorte que la protection fixe (8) et la protection mobile (7) soient ajustées entre elles afin d'être amovibles l'une par rapport à l'autre.

4. Procédé selon la revendication 1, dans lequel la protection inférieure fixe (8) est soit noyée dans le substrat (9) au cours de sa fabrication, soit ancrée sur celui-ci ultérieurement en la collant sur le substrat au moyen d'une colle (4) généralement utilisée pour les planchers ou les revêtements (5).

5. Procédé selon la revendication 1, dans lequel pour des planchers ou des revêtements (5) consistant en des matériaux minces, tels que le linoléum, la moquette ou le papier peint, les parties crénelées des protections fixe (8) et mobile (7) sont prévues moins en relief et moins profondes afin d'offrir une surface plus uniforme permettant d'obtenir un support continu et plus homogène.

6. Procédé selon la revendication 1, dans lequel ladite protection mobile (7) se compose d'un textile non-tissé particulièrement résistant qui est disponible dans le commerce.

7. Procédé selon la revendication 6, dans lequel ladite protection mobile (7) en textile non-tissé présente une surface de contact s'ajustant exactement sur la surface de protection fixe (8).

8. Procédé selon la revendication 1, dans lequel on utilise des câbles latéraux périphériques résistants à la corrosion et à l'humidité et pourvus de poignées (3) ou d'extrémités d'accrochage dissimulées par exemple dans les plinthes du mur (1) et permettant à la protection mobile (7) d'être facilement retirée hors de la protection fixe (8) pour remplacer le plancher ou le revêtement par un neuf.

9. Procédé selon la revendication 9, comprenant les étapes suivantes :
A. Fixation de la protection fixe (8) pour supporter le substrat (9) au cours de sa fabrication ou ensuite au moyen d'une matière adhésive (4) bien connue de l'art ;
B. Positionnement de la protection mobile (7) pourvue de câbles périphériques pour son retrait, et ajustement de celle-ci dans la protection fixe (8) ;
C. Collage du plancher ou du revêtement (5) sur la protection mobile (7) ;
D. Dissimulation des crochets ou poignées (3) des câbles de traction derrière les plinthes ou analogues.

10. Procédé selon la revendication 9, dans lequel après avoir enlevé un plancher ou un revêtement (5), un nouveau plancher ou revêtement (5) est posé à partir de l'étape B du procédé, ladite protection mobile (7) étant soit identique à la protection fixe (8) de matière flexible, soit composée d'un textile non-tissé résistant.

11. Procédé selon la revendication 9, dans lequel si les protections fixe (7) et mobile (8) sont fournies déjà ajustées entre elles sur le premier revêtement de celles-ci, le procédé est mis en oeuvre en passant directement de l'étape A à l'étape C, évitant de ce fait l'étape B du procédé qui est superflue.

12. Procédé selon la revendication 2 ou 3, dans lequel lesdits éléments de support fixe (8) et/ou mobile (7) présentent des parties en saillie crénelées selon une gorge longitudinale (10) parallèle aux éléments crénelés de sorte que lorsque les deux protections fixe (7) et mobile (8) sont associées l'une à l'autre, ladite gorge supplémentaire (10) forme un conduit (12) qui permet la transpiration à la fois du substrat sous-jacent (9) et de la matière adhésive (4), de petits trous de transpiration (11) étant prévus à cet effet dans le fond des gorges des protections fixe (7) et mobile (8) crénelées, lesdits trous communiquant avec lesdits conduits longitudinaux (12) finissant au niveau de la paroi qui délimite le plancher ou le revêtement.

13. Procédé selon la revendication 12, dans lequel la protection mobile crénelée (7) présente au moins une partie en soufflet permettant d'être déformée et prévue près du bord pour être pliée de manière perpendiculaire aux gorges desdites protections crénelées, ladite partie pouvant permettre à la partie d'extrémité de la protection mobile (7) d'être facilement pliée vers le haut ou vers le bas.

14. Elément d'ancrage pour la pose de planchers et de revêtements, et leur retrait et remplacement rapides selon le procédé de la revendication 1, constitué par un élément de support fixe (7) et un élément de support mobile (8) présentant sensiblement la même forme, **caractérisé en ce que** lesdits éléments de support fixe (8) et mobile (7) consistent chacun en une protection crénelée en matière flexible et résistante, le premier élément (8) pouvant être fixé rigidement au substrat (9), le second élément (7) pouvant être collé au premier élément (8) de manière amovible, et le plancher ou le revêtement (5) pouvant être fixé de manière habituelle sur ledit second élément de support, au cours de la pose, au moyen d'une couche de colle conventionnelle pour planchers ou revêtements.

15. Elément d'ancrage selon la revendication 14, dans lequel les parties en relief de la protection mobile crénelée (7) présentent des dimensions telles qu'elles permettent leur ajustement dans les parties creuses correspondantes de la protection fixe crénelée (8), ladite partie en relief et ladite partie creuse présentant une section transversale en queue d'aronde.

16. Elément d'ancrage selon la revendication 14, dans lequel lesdits éléments de support fixe (8) et/ou mobile (7) présentent des parties en saillie crénelées prévues avec une gorge longitudinale (10) parallèle aux éléments crénelés de sorte que lorsque les deux protections fixe (7) et mobile (8) sont associées l'une à l'autre, ladite gorge supplémentaire (10) forme un conduit (12) qui permet la transpiration à la fois du substrat sous-jacent (9) et de la matière adhésive (4), de petits trous de transpiration (11) étant prévus à cet effet dans le fond des gorges des protections fixe (7) et mobile (8) crénelées, lesdits trous communiquant avec lesdits conduits longitudinaux (12) finissant au niveau de la paroi qui délimite le plancher ou le revêtement.

17. Elément d'ancrage selon la revendication 14, dans lequel la protection mobile crénelée (7) présente au moins une partie en soufflet permettant d'être déformée et prévue près du bord pour être pliée de manière perpendiculaire aux gorges desdites protections crénelées, ladite partie pouvant permettre à la partie d'extrémité de la protection mobile (7) d'être facilement pliée vers le haut ou vers le bas.
